# FASCICULE DE BREVET EUROPEEN

(11) **EP 2 770 288 B1**
(45) Date de publication et mention de la délivrance du brevet: **29.04.2020**
(21) Numéro de dépôt: 14155710.8
(22) Date de dépôt: 19.02.2014
(51) Int. Cl.: F28D 20/00, F24D 11/00, F24D 11/02, F24D 17/00, F28D 20/02

(54) **Système de stockage et de déstockage d'énergie thermique contenue dans un fluide**
System zur Speicherung und Entnahme von Wärmeenergie, die in einem Fluid enthalten ist
System for storing and withdrawing thermal energy contained in a fluid

(30) Priorité: 22.02.2013 FR 1351547
(43) Date de publication de la demande: 27.08.2014
(73) Titulaire: ASSOCIATION POUR LA RECHERCHE ET LE DEVELOPPEMENT DES METHODES ET PROCESSUS INDUSTRIELS (ARMINES), 75272 Paris Cédex 06 (FR)
(72) Inventeur: Clodic, Denis, 91120 Palaiseau (FR); Nehme, Georges, 92160 Antony (FR); Nemer, Maroun, 91120 Palaiseau (FR)
(74) Mandataire: Cabinet Beau de Loménie

(56) Documents cités:
- EP-A1- 0 031 153
- DE-A1-102010 006 882
- DE-U1- 20 013 247
- FR-A1- 2 533 538
- US-A- 4 522 254

## Description

L'invention porte sur un système de stockage et déstockage de l'énergie thermique contenue dans un fluide caloporteur.

L'invention trouve notamment son application dans le domaine de la production d'eau chaude sanitaire domestique mais aussi dans le domaine du chauffage de l'eau ou de liquides utilisés dans les procédés industriels.

La présente invention vise plus particulièrement un système dans lequel le stockage de l'énergie thermique et son déstockage doivent pouvoir être réalisés simultanément mais aussi indépendamment, pour des raisons de tarif ou de disponibilité de l'énergie par exemple.

Le document FR2533538 de l'art antérieur décrit un réservoir de stockage d'eau chaude à stratification permettant l'accumulation et l'utilisation simultanées.

Ce réservoir de stockage d'eau chaude est un appareil à pression puisqu'il est à la pression du réseau de distribution, à savoir entre 4 et 6 bars pour l'eau de ville, voire largement supérieure pour les immeubles de grande hauteur. Cette caractéristique impose un certain nombre de contraintes onéreuses sur le réservoir, par exemple quant au matériau (acier) et à l'épaisseur de la paroi du réservoir, ou quant au revêtement de la paroi intérieure du réservoir.

Le document DE 200 13 247 de l'art antérieur décrit un dispositif de stockage de chaleur comportant une série de réservoirs. Dans ce dispositif de stockage, deux échangeurs de chaleur sont positionnés à l'intérieur de chaque réservoir. Cependant, ce système ne permet pas d'obtenir une bonne stratification du liquide caloporteur dans chaque réservoir.

L'invention vise un système de stockage et de déstockage d'énergie thermique qui ne présente pas ces inconvénients.

### Objet et résumé de l'invention

A cet effet, l'invention concerne un système de stockage et de déstockage des calories contenues dans un fluide caloporteur, ce système comportant :
- une série de réservoirs mitoyens et isolés, ladite série comportant au moins un premier réservoir et un dernier réservoir, et au moins un réservoir intermédiaire entre le premier réservoir et le dernier réservoir ;
- chaque réservoir de la série, à l'exception du dernier réservoir comportant une canalisation reliant la partie supérieure de ce réservoir à la partie inférieure du réservoir mitoyen suivant dans la série ;
- un premier échangeur traversé par un circuit de circulation du fluide caloporteur dont une entrée est reliée à la partie supérieure du dernier réservoir et dont la sortie est reliée à la partie inférieure du premier réservoir, ce premier échangeur étant traversé par un circuit accepteur de chaleur ; et
- un deuxième échangeur traversé par un circuit de circulation du fluide caloporteur dont une entrée est reliée à la partie inférieure du premier réservoir et dont la sortie est reliée à la partie inférieure du dernier réservoir, ce deuxième échangeur étant traversé par un circuit donneur de chaleur.

L'invention propose ainsi un système de stockage et de déstockage d'énergie thermique utilisant un fluide caloporteur circulant en boucle fermée, ce fluide étant chauffé et refroidi par deux systèmes d'échange de chaleur différents, l'un source de chaleur fournisseur d'énergie thermique, l'autre puits de chaleur consommateur d'énergie thermique.

Dans la suite de ce document, le premier échangeur et le deuxième échangeur seront appelés « échangeur de déstockage de chaleur » et « échangeur de stockage de chaleur » ou plus simplement « échangeur de déstockage » et « échangeur de stockage »

Ces systèmes d'échange fonctionnent préférentiellement de manière alternée mais peuvent aussi fonctionner de manière concomitante. Le système de stockage et de déstockage selon l'invention découple ainsi la production intermittente d'énergie thermique d'une utilisation continue ou discontinue d'énergie thermique. L'utilisation de l'énergie et la production d'énergie ne sont pas en phase, le stockage permettant de satisfaire le besoin même si la production est absente.

Le système de stockage et de déstockage selon l'invention peut utiliser toute source de chaleur et notamment un chauffe-eau solaire, une chaudière à combustibles, une pompe à chaleur, des rejets thermiques.

Le fluide caloporteur est dédié au stockage et au déstockage des calories qui y sont contenues. Il n'est pas utilisé à d'autres fins.

Conformément à l'invention, le fluide caloporteur est stocké dans des réservoirs mitoyens cloisonnés, le premier réservoir comportant le fluide caloporteur le plus froid et le dernier réservoir comportant le fluide caloporteur le plus chaud étant à la plus grande distance l'un de l'autre.

La disposition de chaque canalisation reliant la partie supérieure d'un réservoir à la partie inférieure du réservoir mitoyen suivant dans la série, ainsi que la disposition des entrées et sorties des premier et deuxième échangeurs permettent une stratification verticale du fluide caloporteur dans chaque réservoir et une stratification horizontale du fluide caloporteur entre tous les réservoirs de la série.

Cette double stratification minimise les pertes thermiques dans le système.
Le circuit accepteur de chaleur peut être à une pression supérieure ou à une pression inférieure à celle du circuit du fluide caloporteur.

De même, le circuit donneur de chaleur peut être à une pression supérieure ou inférieure à celle du circuit du fluide caloporteur. C'est en particulier le cas lorsque le fluide caloporteur échange avec le condenseur d'une pompe à chaleur dont la pression est très généralement supérieure à la pression atmosphérique.

Dans ce mode de réalisation, le circuit caloporteur incluant le stockage peut avantageusement servir de circuit de séparation entre le circuit donneur d'énergie qu'est la pompe à chaleur et le circuit d'eau chaude sanitaire accepteur de chaleur.

Dans un mode particulier de réalisation du système selon l'invention, le fluide caloporteur est un liquide caloporteur, préférentiellement de l'eau. Dans ce mode de réalisation, le dernier réservoir comporte une soupape ouverte mettant le fluide caloporteur à la pression atmosphérique.

Dans ce mode de réalisation, les réservoirs peuvent être avantageusement en matière plastique et donc à un coût bien inférieur aux réservoirs habituels de stockage d'eau chaude sanitaire qui sont des appareils à pression puisqu'ils sont à la pression du réseau de distribution.

Dans un autre mode particulier de réalisation du système selon l'invention, le fluide caloporteur est sous sa tension de vapeur, ce fluide caloporteur échangeant par condensation avec le circuit accepteur de chaleur dans l'échangeur de déstockage et par évaporation avec le circuit donneur de chaleur dans l'échangeur de stockage.

Dans un mode préféré de réalisation, le système selon l'invention est modulaire en ce que les réservoirs pouvant être agencés en série sur place au moment du montage du système.

L'invention vise par conséquent un réservoir pouvant être utilisé dans un système de stockage et de déstockage tel que mentionné ci-dessus.

Conformément à un aspect de l'invention, chaque réservoir présente des dimensions permettant le passage d'une porte d'accès à la pièce du bâtiment dans laquelle le système selon l'invention est installé.

L'invention simplifie ainsi considérablement l'installation d'un système de grande capacité dans un bâtiment.

L'invention concerne en outre un procédé de déstockage des calories contenues dans un fluide caloporteur étant mis en œuvre par un système tel que défini ci-dessus, ce procédé comportant les étapes suivantes :
- activation d'une première pompe placée sur le circuit de circulation du fluide caloporteur traversant le premier échangeur,
- prélèvement du fluide caloporteur dans la partie supérieure du dernier réservoir,
- refroidissement du fluide caloporteur dans le premier échangeur, et
- injection du fluide caloporteur dans la partie inférieure du premier réservoir.

L'invention concerne de plus un procédé de stockage des calories contenues dans un fluide caloporteur étant mis en œuvre par un système tel que défini ci-dessus, ce procédé comportant les étapes suivantes :
- activation d'une deuxième pompe placée sur le circuit de circulation du fluide caloporteur traversant le deuxième échangeur,
- prélèvement du fluide caloporteur dans la partie inférieure du premier réservoir,
- chauffage du fluide caloporteur dans le deuxième échangeur, et
- injection du fluide caloporteur dans la partie inférieure du dernier réservoir.

L'invention concerne en outre un procédé de stockage et de déstockage des calories contenues dans un fluide caloporteur étant mis en œuvre par un système tel que défini ci-dessus, ce procédé comportant les étapes suivantes :
- activation d'une première pompe placée sur le circuit de circulation du fluide caloporteur traversant le premier échangeur,
- prélèvement du fluide caloporteur dans la partie supérieure du dernier réservoir,
- refroidissement du fluide caloporteur dans le premier échangeur,
- injection du fluide caloporteur dans la partie inférieure du premier réservoir,
- activation d'une deuxième pompe placée sur le circuit de circulation du fluide caloporteur traversant le deuxième échangeur,
- prélèvement du fluide caloporteur dans la partie inférieure du premier réservoir,
- chauffage du fluide caloporteur dans le deuxième échangeur, et
- injection du fluide caloporteur dans la partie inférieure du dernier réservoir.

### Brève description des dessins

D'autres caractéristiques et avantages de l'invention apparaîtront à la lumière de la description qui suit, faite en référence aux dessins annexés dans lesquels :
- La figure 1 représente un système de stockage conforme à un mode particulier de réalisation de l'invention en mode de déstockage ;
- La figure 2 représente le système de stockage de la figure 1 en mode de stockage ;
- La figure 3 représente un système de stockage conforme à un autre mode de réalisation de l'invention en mode de déstockage ; et
- La figure 4 représente un détail d'une partie du système de stockage de la figure 1.

### Description détaillée de plusieurs modes de réalisation de l'invention

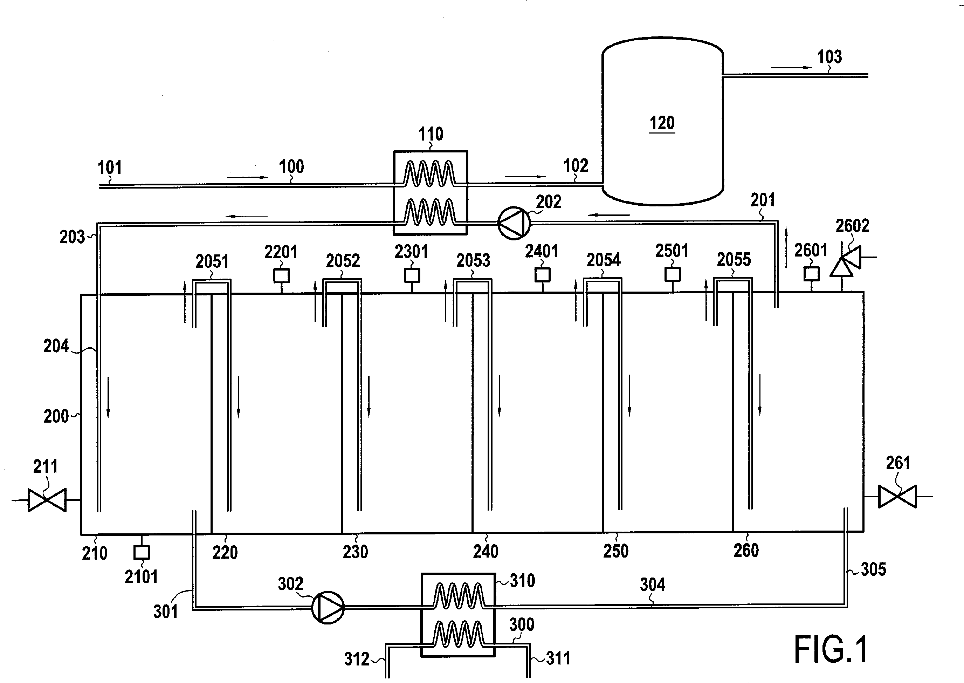

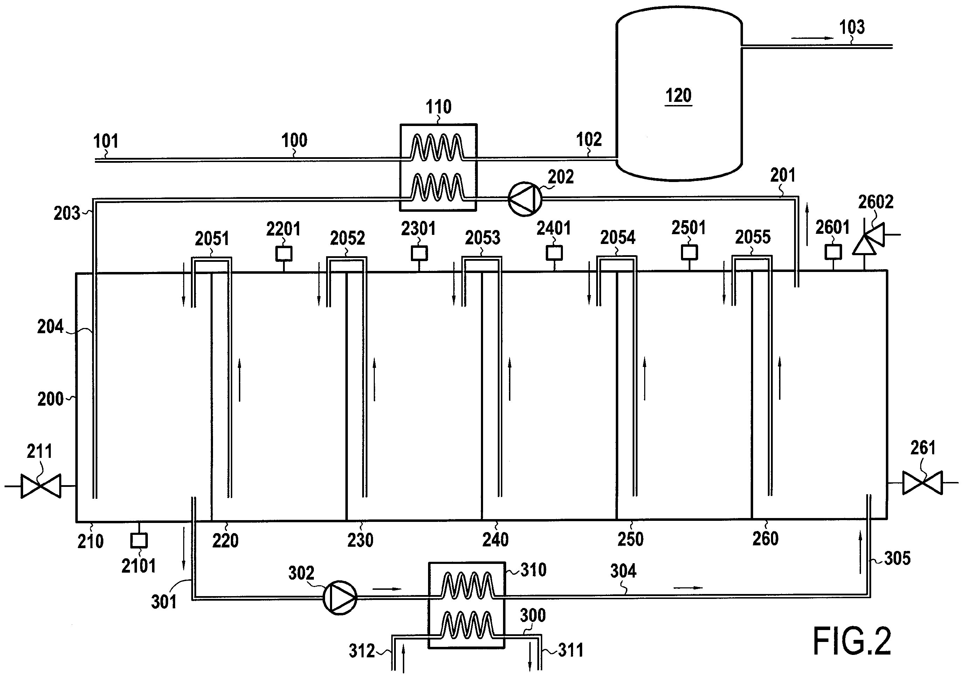

Nous allons maintenant décrire un système 200 de stockage et de déstockage d'énergie thermique conforme à un premier mode de réalisation. Ce système est décrit en mode de déstockage et de stockage de l'énergie, respectivement en référence aux figures 1 et 2.

### Fonctionnement du système selon l'invention en mode de déstockage

Le déstockage de l'énergie thermique, va être décrit en référence à la figure 1.

Dans le mode de réalisation décrit ici, le système 200 comporte principalement un échangeur de déstockage 110 et une série de six réservoirs 210, 220, 230, 240, 250 et 260 mitoyens et isolés remplis d'un liquide caloporteur stocké à une température homogène de stockage, par exemple 60°C dans tous les réservoirs.

Dans le mode de réalisation décrit ici, le liquide caloporteur précité est de l'eau.

Dans le mode de réalisation décrit ici, la série de six réservoirs 210-220-230-240-250-260 est telle que :
- le réservoir 210 est le premier réservoir, à savoir le réservoir en aval de l'échangeur de déstockage 110 ;
- les réservoirs 220 à 250 sont quatre réservoirs intermédiaires placés en série entre le réservoir 210 et le réservoir 260 ; et
- le réservoir 260 est le dernier réservoir, à savoir le réservoir en amont de l'échangeur de déstockage 110.

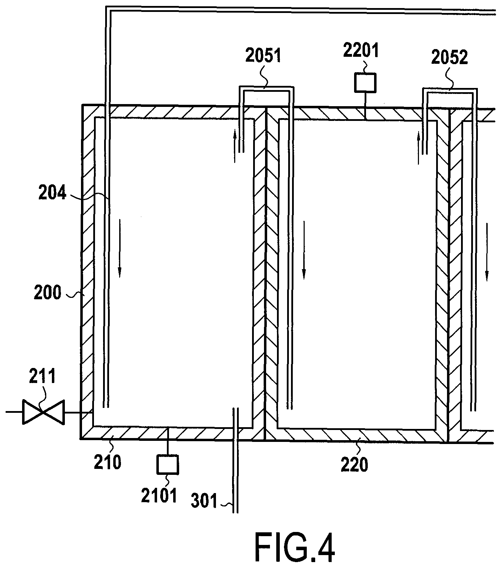

En référence à la figure 4, chaque réservoir 210 et 220 est isolé du réservoir et de l'extérieur par une couche d'isolant dont la résistance thermique est proportionnelle à l'écart de température entre le liquide caloporteur et l'ambiance externe.

Le système 200 selon l'invention comporte des moyens pour faire circuler le liquide caloporteur en circuit fermé dans la boucle constituée par l'échangeur de déstockage 110, le premier réservoir 210, les réservoirs intermédiaires 220, 230, 240 et 250 et le dernier réservoir 260. Cette circulation s'effectue dans le sens inverse des aiguilles d'une montre sur la figure 1. Le premier réservoir 201 et le dernier réservoir 260 sont dotés respectivement d'une vanne 211 et 261 qui permettent de charger en liquide ou de vider le liquide caloporteur dédié à la fonction de stockage déstockage, ces vannes sont reliées à des réseaux de charge ou de vidange non représentés.

Dans le mode de réalisation décrit ici, ces moyens sont constitués par une pompe 202 placée sur une tuyauterie 201 entre l'entrée de l'échangeur 110 et le dernier réservoir 260.

Conformément à l'invention, le liquide caloporteur est puisé dans la partie supérieure du dernier réservoir 260 et réinjecté, après avoir traversé l'échangeur 110 dans la partie inférieure du premier réservoir 210 par une tuyauterie 203.

Chaque réservoir de la série 210∼260 comporte, à l'exception du dernier réservoir amont 260, une tuyauterie 2051, 2052, 2053, 2054, 2055 en crosse de U inversée permettant de puiser le liquide caloporteur dans la partie supérieure de ce réservoir pour la réinjecter dans la partie inférieure du réservoir suivant dans la série.

Conformément à l'invention, le liquide caloporteur cède sa chaleur à un fluide plus froid lorsqu'il traverse l'échangeur de déstockage 110. Dans le mode de réalisation décrit ici, ce fluide circule dans un circuit accepteur de chaleur 100 et est stocké dans un réservoir 120 destiné à alimenter un réseau de distribution 103.

La température du liquide caloporteur est par exemple de 10°C en sortie de l'échangeur 110.

La température du liquide caloporteur en sortie de l'échangeur 110 est inférieure ou égale à la température ambiante du premier réservoir.

Lorsque le liquide caloporteur refroidi dans l'échangeur de déstockage 110 est réinjecté dans la partie inférieure du premier réservoir 210, il pousse le liquide plus chaud à 60°C vers le haut de ce réservoir aval 210. Le liquide caloporteur poussé dans la partie supérieure du réservoir 210 circule dans la crosse en U inversée 2051 pour être réinjecté dans la partie inférieure du premier réservoir intermédiaire 220.

Ce phénomène se propage du fait de l'agencement des crosses en U inversé dans chacun des réservoirs intermédiaires, l'écoulement piston généré dans un réservoir poussant le liquide caloporteur chaud vers le haut, puis vers le réservoir mitoyen suivant et ainsi de suite. Ainsi :
- le liquide caloporteur injecté dans la partie inférieure du premier réservoir intermédiaire 220 pousse le liquide de la partie supérieure de ce réservoir qui emprunte la crosse 2052 pour être réinjecté dans la partie inférieure du deuxième réservoir intermédiaire 230 ;
- le liquide caloporteur injecté dans la partie inférieure du deuxième réservoir intermédiaire 230 pousse le liquide de la partie supérieure de ce réservoir qui emprunte la crosse 2053 pour être réinjecté dans la partie inférieure du troisième réservoir intermédiaire 240 ;
- le liquide caloporteur injecté dans la partie inférieure du troisième réservoir intermédiaire 240 pousse le liquide de la partie supérieure de ce réservoir qui emprunte la crosse 2054 pour être réinjecté dans la partie inférieure du quatrième réservoir intermédiaire 250 ; et
- le liquide caloporteur injecté dans la partie inférieure du quatrième réservoir intermédiaire 250 pousse le liquide de la partie supérieure de ce réservoir qui emprunte la crosse 2052 pour être réinjecté dans la partie inférieure du dernier réservoir 260.

Cette configuration de crosses asymétriques en U inversé 2051 à 2055 reliant successivement la partie supérieure d'un réservoir à la partie inférieure d'un réservoir suivant dans la série assure la stratification systématique du liquide caloporteur froid en bas de chaque réservoir au fur et à mesure de l'épuisement du stock de chaleur.

Cette configuration assure en outre la stratification horizontale du fluide caloporteur entre tous les réservoirs de la série. Ainsi, le liquide caloporteur situé dans le premier réservoir 210 à une certaine hauteur est plus froid que le liquide caloporteur situé dans le deuxième réservoir 220 à la même hauteur etc. Dans la série de réservoirs 210, 220, 230, 240, 250, 260, c'est donc au niveau de la partie inférieure du premier réservoir que le liquide caloporteur est le plus froid et au niveau de la partie supérieure du dernier réservoir 260 que le liquide caloporteur est le plus chaud. Cette double stratification minimise les pertes thermiques dans le système.

Conformément à l'invention, quel que soit le nombre de réservoirs, le liquide caloporteur le plus chaud sera toujours prélevé dans le dernier réservoir de la série dans le sens de circulation afin de fournir les calories requises. Ce mode de transfert requiert un sens de circulation d'un premier réservoir en aval de l'échangeur de déstockage 110 recevant le liquide caloporteur refroidi vers le dernier réservoir de la série, en amont de l'échangeur de déstockage 110 fournissant le liquide caloporteur à la plus haute température et ce avec un nombre aussi grand que nécessaire de réservoirs intermédiaires.

Un tel dispositif permet de stocker de très grande quantité de liquide caloporteur chaud, en limitant la charge au sol, en utilisant tous les volumes disponibles pour y installer un tel stockage modulaire, en limitant le coût des réservoirs qui peuvent être avantageusement à pression atmosphérique.

Dans ce mode de réalisation, le dernier réservoir 260 comporte une soupape 2602 ouverte servant d'équilibrage à la pression atmosphérique.

### Fonctionnement du système en mode de stockage

Le stockage de l'énergie thermique va être décrit en référence à la figure 2.

Sur cette figure, on a représenté un circuit donneur de chaleur 300 et un échangeur de stockage 310 traversé par une canalisation 304 dont l'entrée est placée dans la partie inférieure du premier réservoir 210 et la sortie dans la partie inférieure du dernier réservoir 260.

Dans le mode de réalisation décrit ici, une pompe 302 est placée sur la canalisation 304 entre le premier réservoir 210 et l'échangeur de stockage 310, autrement dit en amont de l'échangeur de stockage 310.

Le circuit donneur de chaleur 300 peut notamment être constitué par une chaudière à combustibles, une pompe à chaleur, un capteur solaire, des effluents thermiques industriels ou domestiques.

Lorsque la reconstitution du stock d'énergie est autorisée par le circuit donneur de chaleur 300, la pompe 302 est mise en action, le liquide caloporteur le plus froid est puisé dans le premier réservoir 210, en amont de l'échangeur de stockage 310, autrement dit le réservoir le plus froid 210 via la tuyauterie 304, réchauffé dans l'échangeur de stockage 310 et réinjecté dans le dernier réservoir 260, en aval de l'échangeur de stockage 310.

Le circuit donneur de chaleur 300 fournit de la chaleur, dans l'échangeur de stockage 310, au fluide caloporteur circulant dans la canalisation 304 traversant l'échangeur de stockage 310.

On notera que la circulation du fluide caloporteur liquide en mode déstockage de chaleur et la circulation en mode stockage se font dans deux sens de circulation opposés.

Le stock d'énergie est reconstitué jusqu'à la température de stockage qui dépend de l'application, typiquement 60°C pour l'eau chaude sanitaire domestique, et des températures variables jusqu' à 100 °C et plus pour les applications industrielles.

Le liquide chaud réinjecté dans la partie inférieure du dernier réservoir 260 monte et génère une circulation dans la crosse en U inversé 2055 dans le sens allant du dernier réservoir 260 vers le premier réservoir.

La réinjection du fluide caloporteur dans la partie inférieure du dernier réservoir 260 et la circulation du fluide caloporteur chaud par les crosses 2051-2055 assure une stratification horizontale du fluide caloporteur entre tous les réservoirs 210, 220, 230, 240, 250, 260 de la série au fur et à mesure de la constitution du stock de chaleur.

Dans le mode de réalisation décrit ici, une sonde 2101 est placée dans la partie inférieure du premier réservoir 210 pour vérifier que la partie la plus froide de tout le stockage atteint bien une température cible.

Dans le mode de réalisation décrit ici, une sonde 2601 est placée dans la partie supérieure du dernier réservoir 260. Elle permet de contrôler la température du liquide caloporteur pendant le stockage mais aussi pendant le déstockage, juste en amont de l'échangeur de déstockage 110.

Des sondes de température peuvent aussi être placées dans les parties inférieure et/ou supérieure d'un ou plusieurs réservoirs intermédiaires.

Le système selon l'invention peut avantageusement fonctionner en mode stockage et en mode déstockage en même temps, ce qui correspond à une utilisation de la chaleur pendant le stockage.

Dans un exemple, le mode stockage et le mode déstockage du système selon l'invention peuvent fonctionner de manière non concomitante.

Compte tenu des règles de dimensionnement du stockage, qui visent à découpler sur des durées plus ou moins longues stockage et déstockage, la quantité de chaleur, prélevée par le circuit accepteur de chaleur 100 lorsque le circuit donneur de chaleur 300 fournit de la chaleur, est limitée.

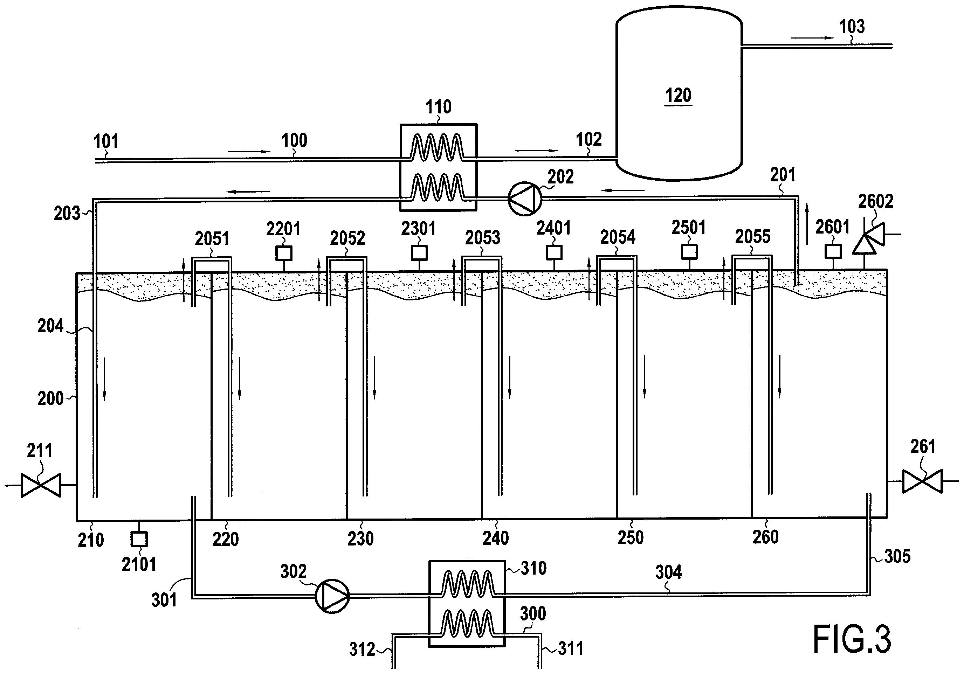

La figure 3 représente une variante du système de stockage selon l'invention dans laquelle le fluide caloporteur, par exemple de l'eau, est sous sa tension de vapeur.

L'expression « tension de vapeur » fait référence à la pression à laquelle la phase gazeuse du fluide caloporteur est en équilibre avec la phase liquide de ce fluide.

Dans ce mode de réalisation, le système doit être dimensionné de telle sorte qu'il y ait un ciel gazeux en partie supérieure de chaque réservoir.

Dans ce mode de réalisation, la chaleur du fluide caloporteur est transmise au fluide circulant dans le circuit accepteur de chaleur 100 par condensation du fluide caloporteur dans l'échangeur de déstockage 110.

Plus précisément, le fluide caloporteur vapeur se condense, ce qui crée un débit vapeur qui est aspiré hors du dernier réservoir 260, ce débit vapeur étant compensé par du liquide qui provient du quatrième réservoir intermédiaire juste en amont 250 et ainsi de suite.

Le débit de fluide caloporteur condensé dans l'échangeur de déstockage 110 est transféré par la pompe 202, disposée dans ce mode de réalisation à l'aval de l'échangeur de déstockage 110, dans la partie inférieure du premier réservoir 210, reconstituant ainsi le stock de caloporteur en phase liquide.

Pour le fonctionnement en mode stockage, lorsque le circuit donneur de chaleur 300 est disponible, la pompe 302 est mise en marche, le fluide caloporteur sous sa tension de vapeur s'évapore dans l'échangeur de stockage 310 en recevant la chaleur du fluide chaud circulant dans le circuit donneur de chaleur 300 et dans l'échangeur de stockage 310.

La phase vapeur est transférée dans le dernier réservoir 260 où elle se condense en se mélangeant au liquide stocké. Le transfert de liquide du dernier réservoir 260 vers le premier réservoir 210 se fait par pression hydrostatique d'un réservoir à l'autre via les canalisations en crosses en U inversé 2055 à 2051.

## Revendications

1. Système (200) de stockage et de déstockage des calories contenues dans un fluide caloporteur, ce système comportant :
- une série de réservoirs mitoyens et isolés, ladite série comportant au moins un premier réservoir (210) et un dernier réservoir (260) et au moins un réservoir intermédiaire (220, 230, 240, 250) entre le premier réservoir (210) et le dernier réservoir (260) ;
- chaque réservoir (210, 220, 230, 240, 250) de ladite série, à l'exception du dernier réservoir (260) comportant une canalisation reliant la partie supérieure dudit réservoir à la partie inférieure du réservoir mitoyen suivant dans ladite série ; et
- un échangeur (110) de déstockage, fournisseur d'énergie thermique et apte à réchauffer le fluide caloporteur, ledit échangeur étant traversé par un circuit de circulation dudit fluide caloporteur dont une entrée est reliée à la partie supérieure du dernier réservoir (260) et dont la sortie est reliée à la partie inférieure du premier réservoir (210) ; ledit système étant **caractérisé en ce qu'**il comporte
- un échangeur (310) de stockage, consommateur d'énergie thermique et apte à réchauffer le fluide caloporteur, ledit échangeur étant traversé par un circuit de circulation dudit fluide caloporteur dont une entrée est reliée à la partie inférieure du premier réservoir (210) et dont la sortie est reliée à la partie inférieure du dernier réservoir (260).

2. Système selon la revendication 1 caractérisé en que ledit fluide caloporteur est un liquide caloporteur, ledit dernier réservoir (260) comportant une soupape ouverte (2602) mettant ledit fluide à la pression atmosphérique.

3. Système selon la revendication 2, **caractérisé en ce que** lesdits réservoirs sont en matière plastique.

4. Réservoir pouvant être utilisé dans un système de stockage et de déstockage selon l'une quelconque des revendications 1 à 3.

5. Réservoir selon la revendication 4 **caractérisé en ce qu'**il comporte des dimensions permettant le passage d'une porte d'accès à la pièce du bâtiment dans laquelle le système est installé.

6. Procédé de déstockage des calories contenues dans un fluide caloporteur étant mis en œuvre par un système selon l'une quelconque des revendications 1 à 3, ce procédé comportant les étapes suivantes :
- activation d'une première pompe (202) placée sur le circuit de circulation du fluide caloporteur traversant l'échangeur de déstockage,
- prélèvement du fluide caloporteur dans la partie supérieure du dernier réservoir (260),
- refroidissement du fluide caloporteur dans l'échangeur de déstockage, et
- injection du fluide caloporteur dans la partie inférieure du premier réservoir (210).

7. Procédé de stockage des calories contenues dans un fluide caloporteur étant mis en œuvre par un système selon l'une quelconque des revendications 1 à 3, ce procédé comportant les étapes suivantes :
- activation d'une deuxième pompe (302) placée sur le circuit de circulation du fluide caloporteur traversant l'échangeur de stockage,
- prélèvement du fluide caloporteur dans la partie inférieure du premier réservoir (210),
- chauffage du fluide caloporteur dans l'échangeur de stockage, et
- injection du fluide caloporteur dans la partie inférieure du dernier réservoir (260).

8. Procédé de stockage et de déstockage des calories contenues dans un fluide caloporteur étant mis en œuvre par un système selon l'une quelconque des revendications 1 à 3, ce procédé comportant les étapes:
- d'un procédé de déstockage selon la revendication 6 et les étapes d'un procédé de stockage selon la revendication 7.

9. Procédé de stockage et de déstockage selon la revendication 8, **caractérisé en ce que** ledit fluide caloporteur est sous sa tension de vapeur, ledit fluide caloporteur échangeant par condensation avec le circuit (100) accepteur de chaleur dans l'échangeur de déstockage (110) et par évaporation avec le circuit donneur de chaleur par dans l'échangeur de stockage (310).

## Patentansprüche

1. Speicher- und Abgabesystem (200) für Kalorien, die in einem Kühlfluid enthalten sind, wobei dieses System umfasst:
- eine Reihe von angrenzenden und isolierten Behältern, wobei die Reihe mindestens einen ersten Behälter (210) und einen letzten Behälter (260) und mindestens einen Zwischenbehälter (220, 230, 240, 250) zwischen dem ersten Behälter (210) und dem letzten Behälter (260) umfasst,
- wobei jeder Behälter (210, 220, 230, 240, 250) der Reihe mit Ausnahme des letzten Behälters (260) eine Rohrleitung umfasst, welche den oberen Teil des Behälters mit dem unteren Teil des in dieser Reihe folgenden angrenzenden Behälters verbindet, und
- einen Abgabe-Wärmetauscher (110), der thermische Energie liefert und dazu geeignet ist, das Kühlfluid zu erwärmen, wobei der Wärmetauscher von einem Kreis zur Zirkulation des Kühlfluids durchquert wird, bei dem ein Eingang mit dem oberen Teil des letzten Behälters (260) verbunden ist und der Ausgang mit dem unteren Teil des ersten Behälters (210) verbunden ist, wobei das System **dadurch gekennzeichnet ist, dass** es umfasst
- einen Speicher-Wärmetauscher (310), der thermische Energie verbraucht und dazu geeignet ist, das Kühlfluid zu erwärmen, wobei der Wärmetauscher von einem Kreis zur Zirkulation des Kühlfluids durchquert wird, bei dem ein Eingang mit dem unteren Teil des ersten Behälters (210) verbunden ist und der Ausgang mit dem unteren Teil des letzten Behälters (260) verbunden ist.

2. System nach Anspruch 1, **dadurch gekennzeichnet, dass** das Kühlfluid eine Kühlflüssigkeit ist, wobei der letzte Behälter (260) ein offenes Ventil (2602) umfasst, welches das Fluid dem atmosphärischen Druck aussetzt.

3. System nach Anspruch 2, **dadurch gekennzeichnet, dass** die Behälter aus Kunststoff bestehen.

4. Behälter, der in einem Speicher- und Abgabesystem nach einem der Ansprüche 1 bis 3 verwendet werden kann.

5. Behälter nach Anspruch 4, **dadurch gekennzeichnet, dass** er Abmessungen aufweist, die den Durchgang durch eine Zugangstür zu dem Raum des Gebäudes erlauben, in dem das System installiert ist.

6. Verfahren zur Abgabe von Kalorien, die in einem Kühlfluid enthalten sind, das von einem System nach einem der Ansprüche 1 bis 3 umgesetzt wird,
wobei dieses Verfahren die folgenden Schritte umfasst:
- Aktivierung einer ersten Pumpe (202), die in dem Kreis zur Zirkulation des Kühlfluids platziert ist, der den Abgabe-Wärmetauscher durchquert,
- Entnahme des Kühlfluids in dem oberen Teil des letzten Behälters (260),
- Kühlung des Kühlfluids in dem Abgabe-Wärmetauscher, und
- Einleitung des Kühlfluids in den unteren Teil des ersten Behälters (210).

7. Verfahren zur Speicherung von Kalorien, die in einem Kühlfluid enthalten sind, das von einem System nach einem der Ansprüche 1 bis 3 umgesetzt wird,
wobei dieses Verfahren die folgenden Schritte umfasst:
- Aktivierung einer zweiten Pumpe (302), die in dem Kreis zur Zirkulation des Kühlfluids platziert ist, der den Speicher-Wärmetauscher durchquert,
- Entnahme des Kühlfluids in dem unteren Teil des ersten Behälters (210),
- Erwärmung des Kühlfluids in dem Speicher-Wärmetauscher und
- Einleitung des Kühlfluids in den unteren Teil des letzten Behälters (260).

8. Verfahren zur Speicherung und Abgabe von Kalorien, die in einem Kühlfluid enthalten sind, das von einem System nach einem der Ansprüche 1 bis 3 umgesetzt wird,
wobei dieses Verfahren die Schritte:
- eines Verfahrens zur Abgabe nach Anspruch 6 und
- die Schritte eines Verfahrens zur Speicherung nach Anspruch 7 umfasst.

9. Verfahren zur Speicherung und Abgabe nach Anspruch 8,
**dadurch gekennzeichnet, dass** das Kühlfluid unter seinem Dampfdruck steht, wobei das Kühlfluid mit dem Kreis (100), der Wärme aufnimmt, in dem Abgabe-Wärmetauscher (110) durch Kondensation, und mit dem Kreis, der Wärme abgibt, in dem Speicher-Wärmetauscher (310) durch Verdampfung Wärme tauscht.

## Claims

1. A system (200) for storing and retrieving the calories contained in a heat-transfer fluid, this system comprising:
- a series of adjoining and insulated tanks, said series comprising at least a first tank (210) and a last tank (260) and at least one intermediate tank (220, 230, 240, 250) between the first tank (210) and the last tank (260);
- each tank (210, 220, 230, 240, 250) in said series, except for the last tank (260) comprising a pipe connecting the upper part of said tank to the lower part of the next intermediate tank in said series; and
- a retrieval exchanger (110), supplying thermal energy and capable of heating the heat-transfer fluid, the said exchanger having a circuit for circulating the said heat-transfer fluid, one inlet of which is connected to the upper part of the last tank (260) and the outlet of which is connected to the lower part of the first tank (210); the said system being **characterized in that** it includes
- a storage exchanger (310), which consumes thermal energy and is capable of heating the heat-transfer fluid, said exchanger having a circuit for circulating said heat-transfer fluid, one inlet of which is connected to the lower part of the first tank (210) and the outlet of which is connected to the lower part of the last tank (260).

2. The system as claimed in claim 1, **characterized in that** said heat-transfer fluid is a heat-transfer liquid, said last tank (260) comprising an open valve (2602) putting said fluid at atmospheric pressure.

3. The system as claimed in claim 2, **characterized in that** said tanks are made of plastic.

4. A tank for use in a storage and retrieval system as claimed in any one of claims 1 to 3.

5. The tank as claimed in claim 4, **characterized in that** it has dimensions allowing the passage of an access door to the room of the building in which the system is installed.

6. A process for retrieving the calories contained in a heat-transfer fluid being implemented by a system as claimed in any one of claims 1 to 3, this process comprising the following steps:
- activation of a first pump (202) placed on the circulation circuit of the heat-transfer fluid passing through the retrieval exchanger,
- withdrawal of the heat-transfer fluid from the upper part of the last tank (260),
- cooling of the heat-transfer fluid in the retrieval exchanger, and
- injection of the heat-transfer fluid into the lower part of the first tank (210).

7. A process for storing the calories contained in a heat-transfer fluid being implemented by a system as claimed in any one of claims 1 to 3, this process comprising the following steps:
- activation of a second pump (302) placed on the circulation circuit of the heat-transfer fluid passing through the storage exchanger,
- withdrawal of the heat-transfer fluid from the lower part of the first tank (210),
- heating of the heat transfer medium in the storage heat exchanger, and
- injection of the heat-transfer fluid into the lower part of the last tank (260).

8. A process for storing and retrieving the calories contained in a heat-transfer fluid being implemented by a system as claimed in any one of claims 1 to 3, this process comprising the steps:
- of a retrieval process as claimed in claim 6 and the steps of a storage process as claimed in claim 7.

9. A storage and retrieval process as claimed in claim 8, **characterized in that** said heat-transfer fluid is at its vapor pressure, said heat-transfer fluid exchanging by condensation with the heat acceptor circuit (100) in the retrieval exchanger (110) and by evaporation with the heat donor circuit (310) in the storage exchanger (310).
